# EUROPEAN PATENT APPLICATION

(11) **EP 1 710 649 A2**
(43) Date of publication of application: **11.10.2006**
(21) Application number: 06007190.9
(22) Date of filing: 05.04.2006
(51) Int. Cl.: G05B 19/425, B25J 9/16

(54) **Motion control apparatus for teaching robot position, robot-position teaching apparatus, motion control method for teaching robot postion, robot-position teaching method, and motion control program for teaching robot-position**

(30) Priority: 07.04.2005 JP 2005110955
(71) Applicant: SEIKO EPSON CORPORATION, Shinjuku-ku, Tokyo 163-0811 (JP)
(72) Inventor: Setsuda, Noboyuki, Suwa-shi Nagano-ken 392-8502 (JP)
(74) Representative: HOFFMANN EITLE

(57) **Abstract**

A motion control apparatus for teaching a robot position includes an operating unit (12) that inputs an operating command to a robot (1) on a camera coordinate system having, as a reference, an image capturing screen displayed on the monitor; a converting unit (16a) that generates a motion vector on the camera coordinate system for moving the robot (1) from the current position to the next moving position in accordance with the operating command on the camera coordinate system input from the operating unit (12) and converts the motion vector on the camera coordinate system into a motion vector on a robot coordinate system, an operating-instruction generating unit (16b) that generates a motor instructing value to be given to a motor arranged at a joint of the robot (1) based on the motion vector on the robot coordinate system obtained by the converting unit (16a), and a motor control unit (14) that controls the motor arranged at the joint of the robot in accordance with the motor instructing value generated by the operating-instruction generating unit (16b).

## Description

### BACKGROUND OF THE INVENTION

### 1. Field of the Invention

The present invention relates to a technology suitable for operating of a robot to a teaching preset position while watching a captured image of a camera.

### 2. Description of the Related Art

Conventionally, according to a robot-position teaching method, a robot comprises a camera, the camera captures an image of an inspection object, the captured image is subjected to image processing by an image processing apparatus, and the inspection object is inspected. Further, in an inspecting apparatus having an image display apparatus for displaying the image, a coordinate system of the robot is set in the image processing apparatus before teaching the robot, and the robot position is transmitted to the image processing apparatus from a robot controller during the teaching. Furthermore, the image processing apparatus calculates a robot coordinate system in accordance with the change in the robot attitude, and the image display apparatus displays the robot coordinate system that changes the display direction thereof on a display screen in accordance with the change in the robot attitude.

Herein, in order to set, as the teaching position, the robot attitude at the time when an inspection object is in the center of a display screen, the jog operation for finely adjusting the robot position with manual operation is performed so that the inspection object comes to a target position by stepwise operation of the robot. When the operation is performed with the technology described in Japanese Patent No. 3125374 (Patent Document 1), a teacher needs to issue an operation instruction while recognizing a relationship between a robot coordinate system, serving as a coordinate system in actually issuing the operation instruction, and a camera coordinate system having vertical and horizontal directions, as the reference, on the display screen.

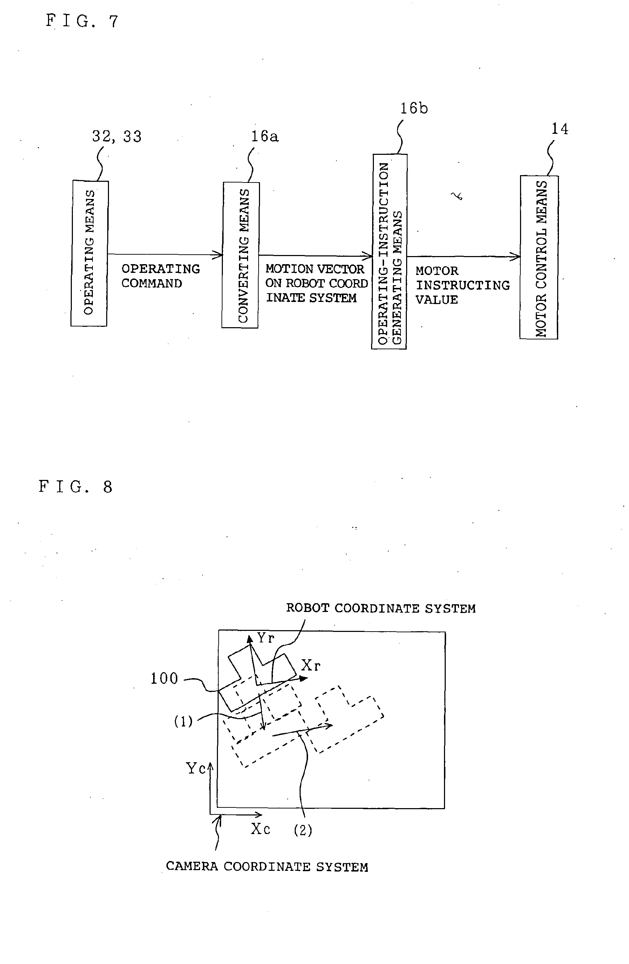

In consideration of the foregoing, an example is given as shown in Fig. 8, in which an inspection object 100 on the upper left of the display screen is moved to the center of the display screen. In this case, first, a robot is moved in the positive direction of the Yr axis on the robot coordinate system. Thus, the inspection object 100 is moved in the negative direction (arrow (1) direction) of the Yr axis on the robot coordinate system on the display screen. Thereafter, the robot is moved in the negative direction of the Xr axis. Thus, the inspection object 100 is moved in the positive direction (arrow (2) direction) of the Xr axis on the display screen, thereby moving the inspection object 100 to the center of the display screen. Herein, referring to Fig. 8, the Xr axis direction on the robot coordinate system is slightly inclined in the upper right direction of the Xc axis direction on the camera coordinate system. Therefore, when moving the inspection object 100 in the negative direction (arrow (1) direction) of the Yr axis, the robot needs to be moved slightly in the negative direction of the Yr axis, not in the center of the Yr axis, in consideration of the motion of the robot in the upper right direction on the display screen at the time of next motion of the robot in the positive direction of the Xr axis. As mentioned above, the teacher needs to perform the jog operation while recognizing the relationship between the robot coordinate system and the camera coordinate system, and this operation becomes the burden of the teacher.

### SUMMARY

The present invention is devised in consideration of the above problems. An advantage of some aspects of the present invention is to provide a motion control apparatus and a robot-position teaching apparatus, for teaching a robot position, a motion control method and a robot-position teaching method, for teaching a robot position, a robot-position teaching method, and a motion control program for teaching a robot-position, in which an intuitional teaching operation based on an image capturing screen is made possible to reduce the burden of the teacher and improve the efficiency of the teaching operation.

According to an aspect of the present invention, there is provided a motion control apparatus for teaching a robot position by moving a robot end-point to a teaching preset position, in a system for displaying an image captured with a camera on a monitor and for setting a positional relationship between the camera and the robot end-point so that the captured image changes in conjunction with the operation of the robot end-point. The motion control apparatus comprises: operating means that inputs an operating command to the robot on a camera coordinate system having, as a reference, an image capturing screen displayed on the monitor; converting means that generates a motion vector on the camera coordinate system for moving the robot from the current position to the next moving position in accordance with the operating command on the camera coordinate system input from the operating means and converts the motion vector on the camera coordinate system into a motion vector on a robot coordinate system; operating-instruction generating means that generates a motor instructing value to be given to a motor arranged at a joint of the robot based on the motion vector on the robot coordinate system obtained by the converting means; and motor control means that controls the motor arranged at the joint of the robot in accordance with the motor instructing value generated by the operating-instruction generating means.
The motion is controlled on the camera coordinate system and, therefore, the end point of the robot can be moved to the teaching preset position by an intuitional operating instruction based on the image capturing screen. As a consequence thereof, the burden of the teacher can be reduced. Further, the end point of the robot can be moved to the target position by a minimum and sufficient number of execution without unnecessary increase in the excution number of the operation instructions. Thus, the efficiency of the teaching can be improved. Furthermore, the operating error can be suppressed.

Further, in the motion control apparatus for teaching a robot position according to another aspect of the present invention, the operating means comprises operating-direction designating buttons that designate the x axis, the y axis, and the z axis on the camera coordinate system, and operating buttons that operate the robot end-point in the axial direction designated by the operating-direction designating button. As mentioned above, the operating instruction using the button operation facilitates the input operation of the operating command.

Furthermore, the motion control apparatus for teaching a robot position according to a further aspect of the present invention further comprises: display means that displays a teaching operation screen having the operating-direction designating buttons and the operating buttons. As mentioned above, the teaching operation screen displayed on the display means may have the operating-direction designating button and the operating button.

In addition, in the motion control apparatus for teaching a robot position according to a further aspect of the present invention, the display means is touch-panel display means. As mentioned above, the display means may be a touch-panel one.

In addition, in the motion control apparatus for teaching a robot position according to a further aspect of the present invention, the amount of motion on the camera coordinate system in accordance with the press-down operation of the operating buttons is preset, and the end point of the robot is moved in accordance with the press-down operation of the operating buttons. As mentioned above, the motion of the end point of the robot can be moved with the amount of motion corresponding to the press-down operation.

In addition, in the motion control apparatus for teaching a robot position according to a further aspect of the present invention, preferably, the teaching preset position is the position of the robot end-point at the time when a work as a working target is positioned in the center of the image capturing screen. In general, in the image captured by the camera, processing precision of the center on the screen is higher than that of the end on the screen. Therefore, the teaching position is set to the robot position at the time when the work position is in the center of the image capturing screen and, thus, this contributes to the operation of the work with high precision.

In addition, according to a further aspect of the present invention, there is provided a robot-position teaching apparatus comprising one of the above-mentioned motion control apparatuses for teaching the robot position. The robot-position teaching apparatus further comprises memory means that stores, as teaching data, attitude data of the robot at the time when the operating command is repeatedly input from the operating means and the end point of the robot reaches the teaching preset position. Thus, upon teaching the robot position, the end point of the robot can be moved to the teaching preset position with the motion control apparatus for teaching the robot position. As a consequence thereof, the teaching operation can be easily performed.

In addition, according to a further aspect of the present invention, there is provided a motion control method for teaching a robot position by moving a robot end-point to a teaching preset position, in a system for displaying an image captured with a camera on a monitor and for setting a positional relationship between the camera and the robot end-point so that the captured image changes in conjunction with the operation of the robot end-point. The motion control method comprises: an operating-command input step of receiving an input of an operating command to the robot on a camera coordinate system having, as a reference, an image capturing screen displayed on the monitor; a converting step of generating a motion vector on the camera coordinate system for moving the robot from the current position to the next moving position in accordance with the operating command on the camera coordinate system input from the operating-command input step and converting the motion vector on the camera coordinate system into a motion vector on a robot coordinate system; a operating-instruction generating step of generating a motor instructing value be given to a motor arranged at a joint of the robot based on the motion vector on the robot coordinate system obtained by the converting step; and a motor control step of controlling the motor arranged at the joint of the robot in accordance with the motor instructing value generated by the operating-instruction generating step.

In addition, in the motion control method for teaching the robot position according to a further aspect of the present invention, the operating-command input step is repeated and the robot end-point is moved so that the robot end-point is positioned at the teaching preset position, and attitude data of the robot at the time is stored, as teaching data.

In addition, according to a still another aspect of the present invention, a motion control program for teaching a robot-position enables a computer to execute the steps of the above-mentioned motion control method for teaching the robot position.

### BRIEF DESCRIPTION OF THE DRAWINGS

Fig. 1 is a diagram showing the entire structure of a robot system according to an embodiment of the present invention;

Fig. 2 is a block diagram showing the structure of a robot control apparatus;

Fig. 3 is a diagram showing one example of a teaching operation screen;

Fig. 4 is a diagram showing a robot control screen;

Fig. 5 is a diagram showing one example of the teaching screen displayed on display means of the robot control apparatus;

Figs. 6A to 6E are diagrams showing the flow of an image capturing screen in motion control operation;

Fig. 7 is a block diagram showing the data flow in the motion control operation; and

Fig. 8 is an operational explanatory diagram of a conventional apparatus.

### DESCRIPTION OF THE PREFERRED EMBODIMENTS

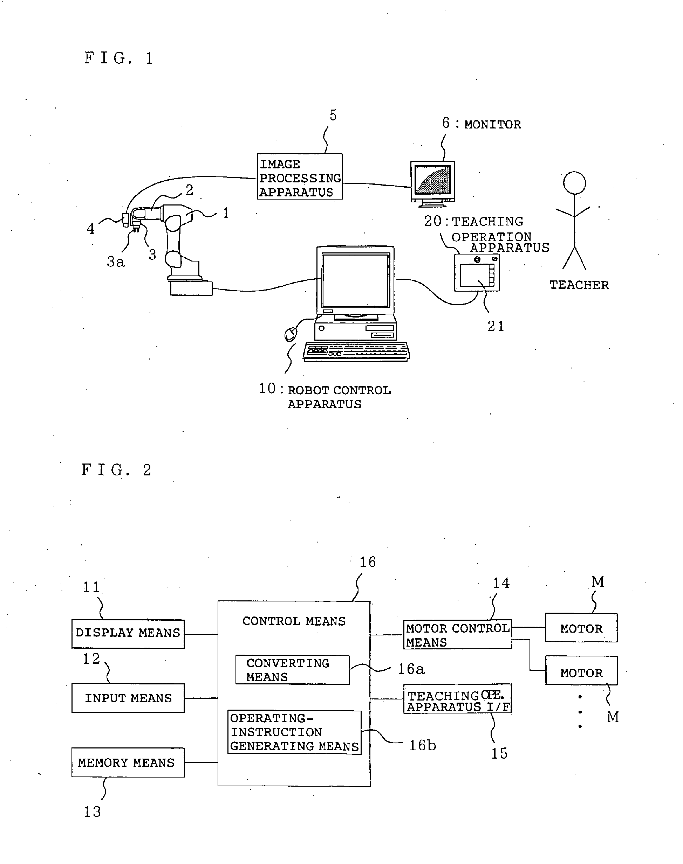

Fig. 1 is a diagram showing the entire structure of a robot system to which a motion control apparatus for teaching a robot position is applied according to an embodiment of the present invention.

A robot 1 comprises a multi-articulated robot having a plurality of joints according to the embodiment. An operating tool 3a capable of gripping a work, and a camera 4 that captures an image of the work are attached to a robot end-point 3 at the end of an arm 2. An image processing apparatus 5 processes the image captured by the camera 4 and a monitor 6 displays the image. Further, a robot control apparatus 10 that controls the robot 1 is connected to the robot 1, and a teaching operation apparatus 20 that performs teaching operation to the robot 1 is connected to the robot control apparatus 10. All the above-mentioned components constitute a robot system.

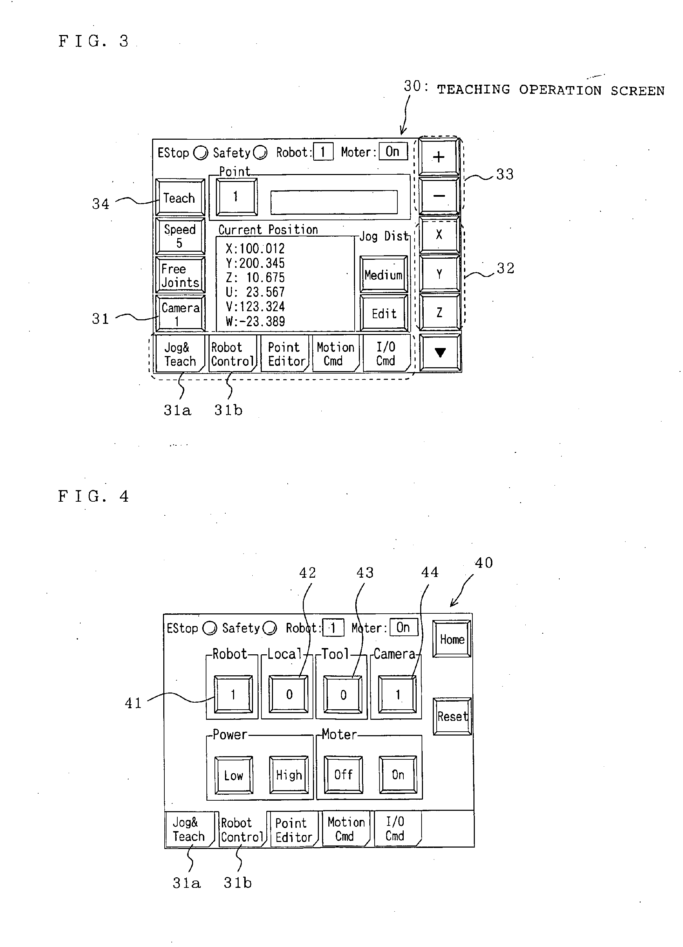

The teaching operation apparatus 20 comprises touch-panel display means 21 that displays a teaching operation screen shown in Figs. 3 and 4, which will be described later, memory means (not shown) that stores various screen data and a control program, and a calculating unit (not shown) that entirely controls the teaching operation apparatus 20 under the control program in the memory means. Further, the calculating unit performs processing for outputting, to the robot control apparatus 10, a signal based on an operating input on the teaching operation screen.

Fig. 2 is a block diagram showing the structure of the robot control apparatus. The robot control apparatus 10 is e.g., a computer, including a personal computer, and comprises display means 11 that displays various images, input means 12 comprising a keyboard and a mouse that input various operations, memory means 13 that stores various data and control programs including a motion control program for teaching the robot position, motor control means 14 that controls a motor M arranged at a joint of the robot 1 on the basis of a control signal from control means 16, which will be described later, a teaching operation apparatus interface (I/F) 15 that receives and transmits signals to/from the teaching opearation apparatus, and the control means 16 that entirely controls the robot control apparatus 10.

The control means 16 comprises converting means 16a, and operating-instruction generating means 16b. The converting means 16a detects a designated coordinate system a designated operating direction and an amount of operation in accordance with an operating command input from the input means 12 or an operating command input from the teaching operation apparatus 20 via the teaching operation apparatus I/F 15. Further, the converting means 16a generates a motion vector on the designated coordinate system for moving the robot 1 from the current position to the next moving position on the basis of the data, and converts the motion vector on the designated coordinate system into a motion vector on the robot coordinate system. The operating-instruction generating means 16b generates a motor instructing value to be given to the motor M that is arranged at the joint of the robot 1 in accordance with the motion vector on the robot coordinate system obtained by the converting means 16a. The motor control means 14 receives the motor instructing value generated by the operating-instruction generating means 16b. Further, the motor control means 14 controls the motor M of the joint in accordance with the motor instructing value, thereby moving the end-point 3 of the robot 1.

The memory means 13 stores the control programs and various data including calibration data for converting the motion vectors on coordinate systems (a local coordinate system, a tool coordinate system, and a camera coordinate system) into a motion vector on the robot coordinate system.

The robot control apparatus 10 with the above structure functions as a motion control apparatus for teaching the robot position and a robot-position teaching apparatus.

Figs. 3 and 4 are diagrams showing examples of a teach screen displayed on the teaching operation apparatus. Fig. 3 is a diagram showing a teaching operation screen, and Fig. 4 is a diagram showing a robot control screen. The teach screen comprises a plurality of screens, in which a teaching operation screen (Jog & Teach) 30 and a robot control screen (Robot Control) 40 can be switched with tabs 31a and 31b. The teaching operation screen 30 comprises a coordinate-system switching button 31, an operating-direction designating button 32, an operating button 33 serving as operating means, and a "Teach" button 34. The coordinate-system switching button 31 switches the coordinate system, and can sequentially switch, every press-down operation, the robot coordinate system (the coordinate system with a setting base of the robot, as the origin), the user local coordinate system (the coordinate system that can be arbitrarily set by the user), the tool coordinate system (the coordinate system set to the operating tool 3a) and the camera coordinate system (the coordinate system based on the image capturing screen). Referring to Fig. 3, the coordinate system is set to the camera coordinate system. Further, a numeral displayed on the coordinate-system switching button 31 shows a camera number. According to the embodiment, the connected camera 4 is one and, therefore, the camera number is designated by "1".

The operating-direction designating button 32 is a button for designating the x axis, the y axis, and the z axis on the coordinate system selected by the coordinate-system switching button 31. The operating button 33 operates the robot end-point 3 in the direction of the coordinate axis on the coordinate system designated by the coordinate-system switching button 31 and the operating-direction designating button 32, and comprises a button in the positive direction and a button in the negative direction. By the operating button 33, the robot end-point 3 is moved by the preset amount of motion every press-down operation. Note that the amount of motion by one-time press-down operation of the operating button 33 is preset by the amount of motion on the camera coordinate system, and can be selected and can be set from three types of 10 mm, 1 mm, and 0.1 mm. Herein, the amount of motion by one-time press-down operation is set to 1 mm. Further, when the operating button 31 is pressed down continuously, the operation with the selected and set amount of motion is repeatedly performed.

The Teach button 34 is a button for storing, to the memory means 13, attitude data of the robot 1 upon pressing down the Teach button 34, as teaching data, and is pressed down when the robot end-point 3 reaches the teaching preset position.

When a plurality of the robots 1, the cameras 4 and the operating tools 3a are included, and a plurality of the user local coordinate systems are set in the robot system, the robot control screen 40 is a screen to select one of plurality of them, and comprises a robot No. Select button 41, a local-coordinate-system No. Select button 42, a tool-coordinate-system No. Select button 43, and a camera-coordinate-system No. Select button 44. With press-down operation of the Select buttons 41 to 44, a ten-key screen (not shown) is displayed. A number is pressed on the ten-key screen, thereby selecting a desired number.

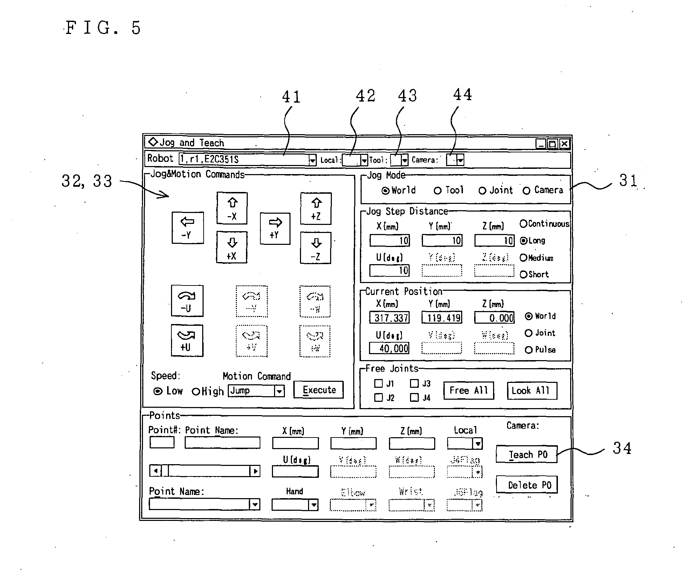

Figs. 3 and 4 show the examples of the Teach screen on the teaching operation apparatus 20. Fig. 5 shows a Teach screen (teaching operation screen) with a screen structure, different from that of the Teach screen shown in Figs. 3 and 4, on the display means 21 of the robot control apparatus 10. Referring to Fig. 5, the same components as those shown in Figs. 3 and 4 are designated by the same reference numerals. As mentioned above, the Teach screen of the teaching operation apparatus 20 may have the screen structure different from that of the Teach screen of the robot control apparatus 10. Alternatively, the Teach screen of the teaching operation apparatus 20 may have the same screen structure as that of the Teach screen of the robot control apparatus 10.

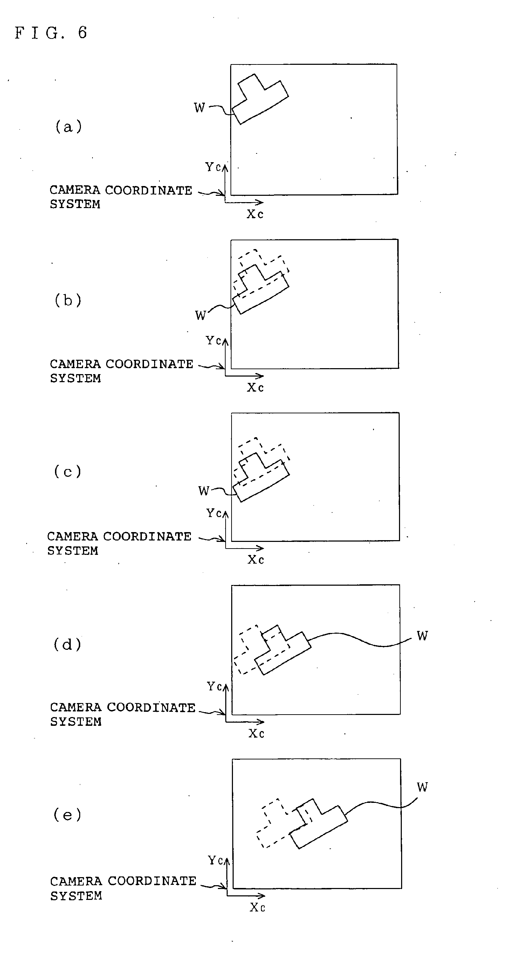

Hereinbelow, a description is given of the operation according to the embodiment. First, the robot end-point 3 is moved to the position where the image of the work can be captured with the camera 4. Similarly to the conventional art, the moving operation is performed by issuing an operating command on the robot coordinate system while confirming a positional relationship between the robot end-point 3 and the work. It is assumed that, as a result of the moving operation, referring to Fig. 6A, an image of a work W is displayed on the upper left of the image capturing screen. Hereinbelow, a description is given of the operation, as characterized features of the present invention. Referring to Figs. 6A to 6E, reference symbols Xc and Yc denote the camera coordinate system. Herein, a description is given of an example of jog operation (robot manual operation) which enables the image of the work W to be positioned in the center of the image capturing screen.

Fig. 7 is a block diagram showing the data flow in the motion control operation according to the embodiment. A teacher first presses down the "Robot Control" tab 31b on the teaching operation screen 30 so as to display the robot control screen 40, and then, selects the robot number and the camera number. Herein, the number of the connected robot 1 is one and the number of the connected camera 4 is one, so that "1" is input for the robot 1 and the camera 4, respectively. Subsequently, the teacher presses down the "Jog & Teach" tab 31a, thereby switching the screen to the teaching operation screen 30. Further, the teacher performs the teaching operation while watching the image capturing screen on the monitor 6. According to the embodiment, the image of the work W is first moved to the center in the vertical direction of the image capturing screen. In this case, the robot end-point 3 (the camera 4) may be moved in the positive direction of the Yc axis. Therefore, the teacher confirms that the designated coordinate system is set to the camera coordinate system on the teaching operation screen 30, selects the Y axis direction by the operating-direction designating button 32, and presses down a "+" button of the operating button 33. Herein, the "+" button is pressed once.

The operating commands from the operating-direction designating button 32 and the operating button 33, as operating means are input to the converting means 16a. The converting means 16a recognizes the designated coordinate system, the coordinate axis, the operating direction, and the amount of motion in accordance with the operating command. Herein, the converting means 16a recognizes the "camera coordinate system", the "Yc axis", and the direction "+". Further, the amount of motion is recognized, as "1 mm", because the number of press-down operation of the operating button 33 is one. The converting means 16a generates, on the basis of the data, the motion vector on the camera coordinate system for moving the robot 1 from the current position to the moving position. Further, the converting means 16a converts the motion vector on the camera coordinate system into the motion vector on the robot coordinate system on the basis of the calibration data on the camera coordinate system in the memory means 13. The motion vector on the robot coordinate system is input to the operating-instruction generating means 16b. The operating-instruction generating means 16b generates the motor instructing value to be given to the motor M arranged at the joint of the robot 1 based on the motion vector on the robot coordinate system, and outputs the generated value to the motor control means 14. The motor control means 14 outputs the control signal to the motor M of the joint in accordance with the motor instructing value input from the operating-instruction generating means 16b. As a consequence thereof, the motor M of each joint in the robot 1 is rotated, thereby moving the arm 2. The entire attitude of the robot 1 is changed, thereby changing the position of the robot end-point. The position of the work W is moved on the image capturing screen, to the position shown by a solid line in Fig. 6B. Note that a dotted line shown in Fig. 6B indicates the position of the work W before the motion.

The repetition of the above-mentioned operation enables the image of the work W to move to the center in the vertical direction on the image capturing screen, as shown in Fig. 6C. Referring to Figs. 6D and 6E, the operation is similarly performed even in the Xc axis direction, thereby moving the work W to the center of the image capturing screen. As mentioned above, the robot end-point 3 reaches the teaching preset position and the teacher presses down the "Teach" button 34. The control means 16 of the robot control apparatus 10 that recognizes this operation allows the memory means 13 to store, as teach data, the current attitude (angle of each joint) of the robot 1.

According to the embodiment, the motion can be controlled on the basis of the camera coordinate system. That is, the motion in the horizontal and vertical directions on the image capturing screen is possible. Therefore, the robot end-point 3 can be moved to the teaching preset position in accordance with the intuitional operating instruction on the image capturing screen. As a consequence thereof, upon teaching the position of the robot, the burden of the teacher can be suppressed with the simple teaching operation. Further, the robot end-point 3 can be moved to the target position by the minimum and sufficient number of execution, without unnecessary increase in the excution number of the operating command, thereby improving the efficiency of the teaching operation. Furthermore, the operating errors can be reduced. In addition, since the operating command is actually input with the button, the operation is simple.

According to the embodiment, the work W is positioned in the center of the image capturing screen. Because the center of the screen generally has the precision higher than that of the end of the screen in the image captured with the camera. As mentioned above, the robot position at the time when the work W is positioned in the center of the image capturing screen is set as the teaching position, and this can contribute to the realization of the operation of the work W with high precision.

Note that, according to the embodiment, the camera 4 is attached to the robot end-point 3. However, the camera arrangement is not limited to this, and the camera may be arranged to another position of the robot 1. Alternatively, the camera may be fixed to the position other than the robot 1. That is, the positional relationship may be set between the camera 4 and the robot end-point 3 so that the captured image changes in conjunction with the operation of the robot end-point 3, and the arranging object is not limited.

According to the embodiment, the display means 21 of the teaching operation apparatus 20 is composed of a touch-panel one, and the operating command is input on the teaching operation screen 30 by directly pressing the operating-direction designating button 32 and the operating button 33. However, the teaching operation screen 30 may be displayed on the display means 11 of the robot control apparatus 10 and the buttons 32 and 33 on the teaching operation screen 30 may be operated with input means, such as a mouse. Alternatively, the buttons 32 and 33 may comprise dedicated input buttons and the press-down operation of the input buttons may become the input of the operating command.

## Claims

1. A motion control apparatus for teaching a robot position by moving a robot end-point (3) to a teaching preset position in a system for displaying an image captured with a camera (4) on a monitor (6) and for setting a positional relationship between the camera (4) and the robot end-point (3) so that the captured image changes in conjunction with the operation of the robot end-point (3), the motion control apparatus comprising:
operating means (12) that inputs an operating command to the robot (1) on a camera coordinate system having, as a reference, an image capturing screen displayed on the monitor (6);
converting means (16a) that generates a motion vector on the camera coordinate system for moving the robot(1) from the current position to the next moving position in accordance with the operating command on the camera coordinate system input from the operating means (12) and converts the motion vector on the camera coordinate system into a motion vector on a robot coordinate system;
operating-instruction generating means (16b) that generates a motor instructing value to be given to a motor arranged at a joint of the robot (1) based on the motion vector on the robot coordinate system obtained by the converting means (16a); and
motor control means (14) that controls the motor arranged at the joint of the robot (1) in accordance with the motor instructing value generated by the operating-instruction generating means (16b).

2. A motion control apparatus for teaching a robot position according to Claim 1, wherein the operating means (12) comprises operating-direction designating buttons (32) that designate the x axis, the y axis, and the z axis on the camera coordinate system, and operating buttons (33) that operate the robot end-point (3) in the axial direction designated by the operating-direction designating button.

3. A motion control apparatus for teaching a robot position according to Claim 2, further comprising:
display means (11) that displays a teaching operation screen having the operating-direction designating buttons (32) and the operating buttons (33).

4. A motion control apparatus for teaching a robot position according to Claim 3, wherein the display means (11) is touch-panel display means.

5. A motion control apparatus for teaching a robot position according to Claim 3 or 4, wherein the amount of motion on the camera coordinate system in accordance with the press-down operation of the operating buttons (33) is preset, and the end point (3) of the robot is moved in accordance with the press-down operation of the operating buttons.

6. A motion control apparatus for teaching a robot position according to any one of Claims 1 to 5, wherein the teaching preset position is the position of the robot end-point (3) at the time when a work as a working target is positioned in the center of the image capturing screen.

7. A robot-position teaching apparatus comprising a motion control apparatus for teaching a robot position according to any one of Claims 1 to 6, the robot-position teaching apparatus further comprising memory means (13) that stores, as teaching data, attitude data of a robot (1) at the time when the operating command is repeatedly input from the operating means (12) and an end point (3) of the robot reaches the teaching preset position.

8. A motion control method for teaching a robot position by moving a robot end-point (3) to a teaching preset position, in a system for displaying an image captured with a camera (4) on a monitor (6) and for setting a positional relationship between the camera (4) and the robot end-point (3) so that the captured image changes in conjunction with the operation of the robot end-point (3), the motion control method comprising:
an operating-command input step of inputting an operating command to the robot (1) on a camera coordinate system having, as a reference, an image capturing screen displayed on the monitor (6);
a converting step of generating a motion vector on the camera coordinate system for moving the robot (1) from the current position to the next moving position in accordance with the operating command on the camera coordinate system input from the operating-command input step and converting the motion vector on the camera coordinate system into a motion vector on a robot coordinate system;
a operating-instruction generating step of generating a motor instructing value to be given to a motor arranged at a joint of the robot (1) based on the motion vector on the robot coordinate system obtained by the converting step; and
a motor control step of controlling the motor arranged at the joint of the robot (1) in accordance with the motor instructing value generated by the operating-instruction generating step.

9. A motion control method for teaching a robot position according to Claim 8, wherein the operating-command input step is repeated and the robot end-point (3) is moved so that the robot end-point (3) is positioned at the teaching preset position, and attitude data of the robot (1) at the time is stored, as teaching data.

10. A motion control program for teaching a robot-position that enables a computer to execute the steps of a motion control method for teaching a robot position according to Claim 8.
